# EUROPEAN PATENT SPECIFICATION

(11) **EP 4 263 053 B1**
(45) Date of publication and mention of the grant of the patent: **01.01.2025**
(21) Application number: 21851642.5
(22) Date of filing: 14.12.2021
(51) Int. Cl.: B01J 38/30, B01J 8/26

(54) **SYSTEMS AND METHODS FOR REGENERATING PARTICULATE SOLIDS**
SYSTEME UND VERFAHREN ZUR REGENERATION VON FESTSTOFFPARTIKELN
SYSTÈMES ET PROCÉDÉS DE RÉGÉNÉRATION DE SOLIDES PARTICULAIRES

(30) Priority: 16.12.2020 US 202063126089 P
(43) Date of publication of application: 25.10.2023
(73) Proprietor: Dow Global Technologies LLC, Midland, MI 48674 (US)
(72) Inventor: PRETZ, Matthew T., Freeport, Texas 77541 (US); SHAW, Donald F., Forked River, New Jersey 08731 (US); WALTER, Richard Edwards, Long Valley, New Jersey 07853 (US); SANDOVAL, Fermin Alejandro, Houston, Texas 77077 (US)
(74) Representative: Boult Wade Tennant LLP
(86) International application number: PCT/US2021/063220
(87) International publication number: WO 2022/132702

(56) References cited:
- WO-A1-2007/117384
- WO-A1-2020/009860

## Description

### CROSS-REFERENCE TO RELATED APPLICATIONS

This application claims the benefit of and priority to U.S. Application Serial No. 63/126,089 filed on December 16, 2020, and entitled "Systems and Methods for Regenerating Particulate Solids".

### TECHNICAL FIELD

Embodiments described herein generally relate to chemical processing and, more specifically, to methods and systems for catalytic chemical conversion.

### BACKGROUND

Many chemicals may be produced through processes employing particulate solids, such as solid particulate catalysts. During these processes, the particulate solids may become "spent" and have reduced activity in subsequent reactions. In addition, endothermic processes require heat and the "spent" catalyst must be reheated. Thus, spent particulate solids may be transferred to a regeneration unit to be reheated and regenerated, increasing the activity of the particulate solids for use in subsequent reactions. Following regeneration in the regeneration unit, the regenerated particulate solids may be transferred back to the reactor for use in subsequent reactions. WO 2020/009860 A1 relates to chemical processing utilizing hydrogen containing supplemental fuel for catalyst processing.

### SUMMARY

There is a need for improved methods for regenerating, reactivating, or increasing the activity of particulate solids for use in the production of various chemicals, such as, but not limited to, light olefins. Many regenerator systems for regenerating particulate solids include a particulate solid treatment vessel positioned directly below a particulate solid separation section such that a riser extends from the particulate solid treatment vessel through the bottom of the particulate solid separation section. Such designs may negatively impact the flow of particulate solids through the particulate solid separation section by creating an annular space in the bottom of the particulate solid separation section where an outlet cannot be centered at the bottom of the particulate solid separation section.

One or more of the presently disclosed methods for regenerating particulate solids utilize systems that address this problem. In one or more embodiments, the riser does not enter the particulate solid separation section through the bottom of the particulate solid separation section. As such, the particulate solid outlet may be centered in the bottom of the particulate solid separation section, resulting in improved flow characteristics of particulate solids exiting the particulate solid separation section.

According to one aspect of the present invention, there is provided a method of regenerating a particulate solid, the method comprising regenerating the particulate solid in a particulate solid treatment vessel. The regenerating of the particulate solid comprises one or more of oxidizing the particulate solid by contact with an oxygen-containing gas; combusting coke present on the particulate solid; or combusting a supplemental fuel to heat the particulate solid. The method further comprises passing the particulate solid through a riser. The riser extends through a riser port of an outer shell of a particulate solid separation section such that the riser comprises an interior riser segment positioned in an interior region of the particulate solid separation section and an exterior riser segment positioned outside of an outer shell of the particulate solid separation section. The particulate solid separation section comprises at least the outer shell defining the interior region of the particulate solid separation section. The outer shell comprises a gas outlet port, a riser port, and a particulate solid outlet port. The outer shell houses a gas/solids separation device and a particulate solid collection area in the interior region of the particulate solid separation section. The riser port is positioned on a sidewall of the outer shell such that it is not located on a central vertical axis of the particulate solid separation section. The method further comprises separating the particulate solid from gases in the gas/solids separation device and passing the particulate solids, separated from the gasses, to the particulate solid collection area located proximate the central vertical axis of the particulate solid separation section.

It is to be understood that both the foregoing brief summary and the following detailed description present embodiments of the technology, and are intended to provide an overview or framework for understanding the nature and character of the technology as it is claimed. The accompanying drawings are included to provide a further understanding of the technology, and are incorporated into and constitute a part of this specification. The drawings illustrate various embodiments and, together with the description, serve to explain the principles and operations of the technology. Additionally, the drawings and descriptions are meant to be merely illustrative, and are not intended to limit the scope of the claims in any manner.

Additional features and advantages of the technology disclosed herein will be set forth in the detailed description that follows, and in part will be readily apparent to those skilled in the art from that description or recognized by practicing the technology as described herein, including the detailed description that follows, the claims, as well as the appended drawings.

### BRIEF DESCRIPTION OF THE DRAWINGS

The following detailed description of specific embodiments of the present disclosure can be best understood when read in conjunction with the following drawings, where like structure is indicated with like reference numerals and in which:
FIG. 1 schematically depicts a reactor system comprising a reactor section and a regenerator section, according to one or more embodiments disclosed herein;
FIG. 2 schematically depicts a particulate solid treatment vessel and exterior riser segment, according to one or more embodiments disclosed herein;
FIG. 3 schematically depicts a particulate solid separation section, according to one or more embodiments disclosed herein;
FIG. 4 depicts a particulate solid collection area, according to one or more embodiments disclosed herein;
FIG. 5 depicts a particulate solid collection area, according to one or more embodiments disclosed herein; and
FIG. 6 graphically depicts residence time distributions for particulate solid collection areas, according to one or more embodiments disclosed herein.

It should be understood that the drawings are schematic in nature, and do not include some components of a fluid catalytic reactor system commonly employed in the art, such as, without limitation, temperature transmitters, pressure transmitters, flow meters, pumps, valves, and the like. It would be known that these components are within the scope of the present embodiments disclosed. However, operational components, such as those described in the present disclosure, may be added to the embodiments described in this disclosure.

Reference will now be made in greater detail to various embodiments, some embodiments of which are illustrated in the accompanying drawings. Whenever possible, the same reference numerals will be used throughout the drawings to refer to the same or similar parts.

### DETAILED DESCRIPTION

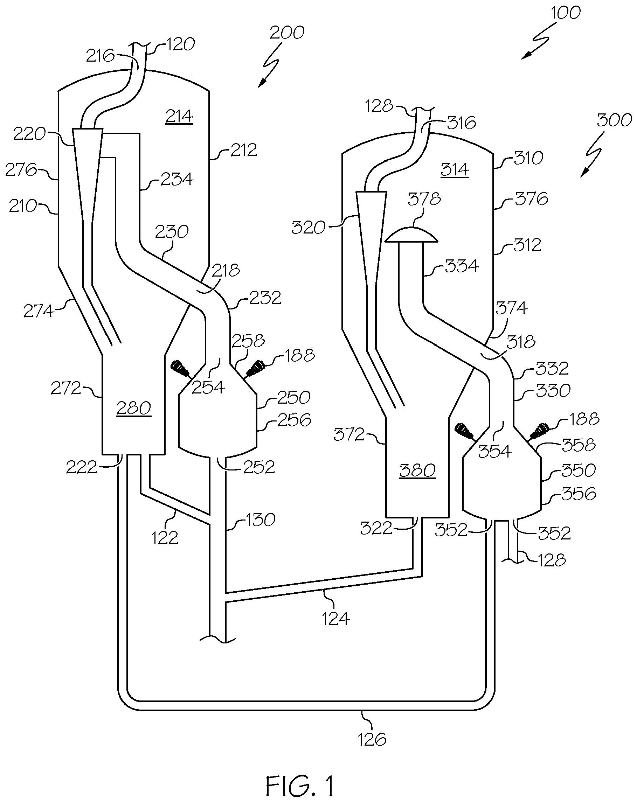

As described herein, methods for regenerating particulate solids disclosed herein may be utilized to regenerate particulate solids from reactor systems for processing chemical streams. Such methods utilize systems which have particular features, such as a particular orientation of system parts. For example, according to the method of the present invention, the particulate solid treatment vessel is not directly below the particulate solid separation section. One particular embodiment, which is disclosed in detail herein, is depicted in FIG. 1. However, it should be understood that the principles disclosed and taught herein may be applicable to other systems which utilize different system components oriented in different ways, or different reaction schemes utilizing various catalyst compositions.

Now referring to FIG. 1, as may be understood with reference to the forgoing figures and description, feed chemical may be reacted by contact with the particulate solid, such as a catalyst, in a reactor section 200. The particulate solid may be separated from the reaction products in the reactor section 200 and passed to the regeneration section 300. In the regeneration section 300, the particulate solid may be regenerated. Such regenerated particulate solid may be passed back to the reactor section 200 for subsequent cycles of the reaction.

While some embodiments are described herein in the context of a reactor system 100, it should be understood that the methods and systems described herein may operate without the use of the reactor section 200, or with alternative means for reacting a feed stream. As such, it should not be construed that the reactor section 200 is required or essential in all embodiments of the presently disclosed methods and systems.

In non-limiting examples, the reactor system 100 described herein may be utilized to produce light olefins from hydrocarbon feed streams. Light olefins may be produced from a variety of hydrocarbon feed streams by utilizing different reaction mechanisms. For example, light olefins may be produced by at least dehydrogenation reactions, cracking reactions, dehydration reactions, and methanol-to-olefin reactions. These reaction types may utilize different feed streams and different particulate solids to produce light olefins. It should be understood that when "catalysts" are referred to herein, they may equally refer to the particulate solid referenced with respect to the system of FIG. 1.

According to one or more embodiments, the reaction may be a dehydrogenation reaction. According to such embodiments, the hydrocarbon feed stream may comprise one or more of ethylbenenze, ethane, propane, n-butane, and i-butane. In one or more embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of ethane. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of propane. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of n-butane. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt. % of i-butane. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of the sum of ethane, propane, n-butane, and i-butane.

In one or more embodiments, the dehydrogenation reaction may utilize gallium and/or platinum particulate solids as a catalyst. In such embodiments, the particulate solids may comprise a gallium and/or platinum catalyst. As described herein, a gallium and/or platinum catalyst comprises gallium, platinum, or both. The gallium and/or platinum catalyst may be carried by an alumina or alumina silica support, and may optionally comprise potassium. Such gallium and/or platinum catalysts are disclosed in U.S. Pat. No. 8,669,406. However, it should be understood that other suitable catalysts may be utilized to perform the dehydrogenation reaction.

In one or more embodiments, the reaction mechanism may be dehydrogenation followed by combustion (in the same chamber). In such embodiments, a dehydrogenation reaction may produce hydrogen as a byproduct, and an oxygen carrier material may contact the hydrogen and promote combustion of the hydrogen, forming water. Examples of such reaction mechanisms, which are contemplated as possible reactions mechanisms for the systems and methods described herein, are disclosed in WO 2020/046978.

According to one or more embodiments, the reaction may be a cracking reaction. According to such embodiments, the hydrocarbon feed stream may comprise one or more of naphtha, n-butane, or i-butane. According to one or more embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of naphtha. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of n-butane. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of i-butane. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of the sum of naphtha, n-butane, and i-butane.

In one or more embodiments, the cracking reaction may utilize one or more zeolites as a catalyst. In such embodiments, the particulate solids may comprise one or more zeolites. In some embodiments, the one or more zeolites utilized in the cracking reaction may comprise a ZSM-5 zeolite. However, it should be understood that other suitable catalysts may be utilized to perform the cracking reaction. For example, suitable catalysts that are commercially available may include Intercat Super Z Excel or Intercat Super Z Exceed. In additional embodiments, the cracking catalyst may comprise, in addition to a catalytically active material, platinum. For example, the cracking catalyst may include from 0.001 wt.% to 0.05 wt.% of platinum. The platinum may be sprayed on as platinum nitrate and calcined at an elevated temperature, such as around 700°C. Without being bound by theory, it is believed that the addition of platinum to the catalyst may allow for easier combustion of supplemental fuels, such as methane.

According to one or more embodiments, the reaction may be a dehydration reaction. According to such embodiments, the hydrocarbon feed stream may comprise one or more of ethanol, propanol, or butanol. According to one or more embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of ethanol. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of propanol. In additional embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of butanol. In additional embodiments, the hydrocarbon feed stream or may comprise at least 50 wt.%, at least 60 wt.%, at least 70 wt.%, at least 80 wt.%, at least 90 wt.%, at least 95 wt.% or even at least 99 wt.% of the sum of ethanol, propanol, and butanol.

In one or more embodiments, the dehydration reaction may utilize one or more acid catalysts. In such embodiments, the particulate solids may comprise one or more acid catalysts. In some embodiments, the one or more acid catalysts utilized in the dehydration reaction may comprise a zeolite (such as ZSM-5 zeolite), alumina, amorphous aluminosilicate, acid clay, or combinations thereof. For example, commercially available alumina catalysts which may be suitable, according to one or more embodiments, include SynDol (available from Scientific Design Company), V200 (available from UOP), or P200 (available from Sasol). Commercially available zeolite catalysts which may be suitable include CBV 8014, CBV 28014 (each available from Zeolyst). Commercially available amorphous aluminosilicate catalysts which may be suitable include silica-alumina catalyst support, grade 135 (available from Sigma Aldrich). However, it should be understood that other suitable catalysts may be utilized to perform the dehydration reaction.

According to one or more embodiments, the reaction may be a methanol-to-olefin reaction. According to such embodiments, the hydrocarbon feed stream may comprise methanol. According to one or more embodiments, the hydrocarbon feed stream may comprise at least 50 wt.%, at least 60 wt.%, at least 70 wt.%, at least 80 wt.%, at least 90 wt.%, at least 95 wt.% or even at least 99 wt.% of methanol.

In one or more embodiments, the methanol-to-olefin reaction may utilize one or more zeolites as a catalyst. In such embodiments, the particulate solids may comprise one or more zeolites. In some embodiments, the one or more zeolites utilized in the methanol-to-olefin reaction may comprise a one or more of a ZSM-5 zeolite or a SAPO-34 zeolite. However, it should be understood that other suitable catalysts may be utilized to perform the methanol-to-olefin reaction.

In one or more embodiments, the operating of chemical process may include passing the product stream out of the reactor. The product stream may comprise light olefins. As described herein, "light olefins" refers to one or more of ethylene, propylene, or butene. As described herein, butene many include any isomer of butene, such as a-butylene, cis-0-butylene, trans-β-butylene, and isobutylene. In one embodiment, the product stream may comprise at least 50 wt.% light olefins. For example, the product stream may comprise at least 60 wt.% light olefins, at least 70 wt.% light olefins, at least 80 wt.% light olefins, at least 90 wt.% light olefins, at least 95 wt.% light olefins, or even at least 99 wt.% light olefins.

Still referring to FIG. 1, the reactor system 100 generally comprises multiple system components, such as a reactor section 200 and a regeneration section 300. As used herein in the context of FIG. 1, a reactor section 200 generally refers to the portion of a reactor system 100 in which the major process reaction takes place, and the particulate solids are separated from the olefin-containing product stream of the reaction. In one or more embodiments, the particulate solids may be spent, meaning that they are at least partially deactivated. Also, as used herein, a regeneration section 300 generally refers to the portion of a fluid catalytic reactor system where the particulate solids are regenerated, such as through combustion, and the regenerated particulate solids are separated from the other process material, such as evolved gasses from the combusted material previously on the spent particulate solids or from supplemental fuel. The reactor section 200 generally includes a reaction vessel 250, a riser 230 including an exterior riser segment 232 and an interior riser segment 234, and a particulate solid separation section 210. The regeneration section 300 generally includes a particulate solid treatment vessel 350, a riser 330 including an exterior riser segment 332 and an interior riser segment 334, and a particulate solid separation section 310. Generally, the particulate solid separation section 210 may be in fluid communication with the particulate solid treatment vessel 350, for example, by standpipe 126, and the particulate solid separation section 310 may be in fluid communication with the reaction vessel 250, for example, by standpipe 124 and transport riser 130.

Generally, the reactor system 100 may be operated by feeding a hydrocarbon feed and fluidized particulate solids into the reaction vessel 250, and reacting the hydrocarbon feed by contact with fluidized particulate solids to produce an olefin-containing product in the reaction vessel 250 of the reactor section 200. The olefin-containing product and the particulate solids may be passed out of the reaction vessel 250 and through the riser 230 to a gas/solids separation device 220 in the particulate solid separation section 210, where the particulate solids are separated from the olefin-containing product. The particulate solids may be transported out of the particulate solid separation section 210 to the particulate solid treatment vessel 350. In the particulate solid treatment vessel 350, the particulate solids may be regenerated by various processes. For example, the spent particulate solids are regenerated by one or more of oxidizing the particulate solid by contact with an oxygen containing gas, combusting coke present on the particulate solid, and combusting a supplemental fuel to heat the particulate solid. The particulate solid is then passed out of the particulate solid treatment vessel 350 and through the riser 330 to a riser termination device 378, where the gas and particulate solids from the riser 330 are partially separated. The gas and remaining particulate solids from the riser 330 are transported to secondary separation device 320 in the particulate solid separation section 310 where the remaining particulate solids are separated from the gasses from the regeneration reaction. The particulate solids, separated from the gasses, are passed to a particulate solid collection area 380. The separated particulate solids are then passed from the particulate solid collection area 380 to the reaction vessel 250, where they are further utilized. Thus, the particulate solids may cycle between the reactor section 200 and the regeneration section 300.

In one or more embodiments, the reactor system 100 may include either a reactor section 200 or a regeneration section 300, and not both. In further embodiments, the reactor system 100 may include a single regeneration section 300 and multiple reactor sections 200.

Additionally, as described herein, the structural features of the reactor section 200 and regeneration section 300 may be similar or identical in some respects. For example, each of the reactor section 200 and regeneration section 300 include a reaction vessel (i.e., reaction vessel 250 of the reactor section 200 and particulate solid treatment vessel 350 of the regeneration section 300), a riser (i.e., riser 230 of the reactor section 200 and riser 330 of the regeneration section 300), and a particulate solid separation section (i.e., particulate solid separation section 210 of the reactor section 200 and particulate solid separation section 310 of the regeneration section 300). It should be appreciated that since many of the structural features of the reactor section 200 and the regeneration section 300 may be similar or identical in some respects, similar or identical portions of the reactor section 200 and the regeneration section 300 have been provided reference numbers throughout this disclosure with the same final two digits, and disclosures related to one portion of the reactor section 200 may be applicable to the similar or identical portion of the regeneration section 300, and vice versa.

As depicted in FIG. 1, the reaction vessel 250 may include a reaction vessel particulate solid inlet port 252 defining the connection of transport riser 130 to the reaction vessel 250. The reaction vessel 250 may additionally include a reaction vessel outlet port 254 in fluid communication with, or directly connected to, the exterior riser segment 232 of the riser 230. As described herein, a "reaction vessel" refers to a drum, barrel, vat, or other container suitable for a given chemical reaction. A reaction vessel may be generally cylindrical in shape (i.e., having a substantially circular diameter), or may alternately be non-cylindrically shaped, such as prism shaped with cross-sectional shaped of triangles, rectangles, pentagons, hexagons, octagons, ovals, or other polygons or curved closed shapes, or combinations thereof. Reaction vessels, as used throughout this disclosure, may generally include a metallic frame, and may additionally include refractory linings or other materials utilized to protect the metallic frame and/or control process conditions.

Generally, "inlet ports" and "outlet ports" of any system unit of the fluid catalytic reactor system 100 described herein refer to openings, holes, channels, apertures, gaps, or other like mechanical features in the system unit. For example, inlet ports allow for the entrance of materials to the particular system unit and outlet ports allow for the exit of materials from the particular system unit. Generally, an outlet port or inlet port will define the area of a system unit of the fluid catalytic reactor system 100 to which a pipe, conduit, tube, hose, transport line, or like mechanical feature is attached, or to a portion of the system unit to which another system unit is directly attached. While inlet ports and outlet ports may sometimes be described herein functionally in operation, they may have similar or identical physical characteristics, and their respective functions in an operational system should not be construed as limiting on their physical structures. Other ports, such as the riser port 218, may comprise an opening in the given system unit where other system units are directly attached, such as where the riser 230 extends into the particulate solid separation section 210 at the riser port 218.

The reaction vessel 250 may be connected to a transport riser 130, which in operation, may provide regenerated particulate solids and chemical feed to the reactor section 200. The particulate solids entering the reaction vessel 250 via transport riser 130 may be passed through standpipe 124 to a transport riser 130, thus arriving from the regeneration section 300. In some embodiments, particulate solids may come directly from the particulate solid separation section 210 via standpipe 122 and into a transport riser 130, where they enter the reaction vessel 250. These particulate solids may be slightly deactivated, but may still, in some embodiments, be suitable for use in the reaction vessel 250.

As depicted in FIG. 1, the reaction vessel 250 may be directly connected to the exterior riser segment 232. In one embodiment, the reaction vessel 250 may include a reaction vessel body section 256 and a reaction vessel transition section 258 positioned between the reaction vessel body section 256 and the exterior riser segment 232. The reaction vessel body section 256 may generally comprise a greater diameter than the reaction vessel transition section 258, and the reaction vessel transition section 258 may be tapered from the size of the diameter of the reaction vessel body section 256 to the size of the diameter of the riser 230 such that the reaction vessel transition section 258 projects inwardly from the reaction vessel body section 256 to the exterior riser segment 232. It should be understood that, as used herein, the diameter of a portion of a system unit refers to its general width, as shown in the horizontal direction in FIG. 1.

In one or more embodiments, the reaction vessel 250 may have a maximum cross sectional area that is at least 3 times the maximum cross sectional area of the riser 230. For example, the reaction vessel 250 may have a maximum cross sectional area that is at least 3, at least 4, at least 5, at least 6, at least 7, at least 8, at least 9, or even at least 10 times the maximum cross sectional area of the riser 230. As described herein, unless otherwise explicitly stated, the "cross sectional area" refers to the area of the cross section of a portion of a system component in a plane substantially orthogonal to the direction of general flow of reactants and/or products.

Still referring to FIG. 1, the reactor section 200 may comprise a riser 230, which acts to transport reactants, products, and/or particulate solids from the reaction vessel 250 to the particulate solid separation section 210. In one or more embodiments, the riser 230 may be generally cylindrical in shape (i.e., having a substantially circular cross-sectional shape), or may alternately be non-cylindrically shaped, such as prism shaped with cross-sectional shape of triangles, rectangles, pentagons, hexagons, octagons, ovals, or other polygons or curved closed shapes, or combinations thereof. The riser 230, as used throughout this disclosure, may generally include a metallic frame, and may additionally include refractory linings or other materials utilized to protect the metallic frame and/or control process conditions.

The riser 230 includes an exterior riser segment 232 and an interior riser segment 234. As used herein, an "exterior riser segment" refers to the portion of the riser that is outside of the particulate solid separation section, and an "interior riser segment" refers to the portion of the riser that is within the particulate solid separation section. For example, in the embodiment depicted in FIG. 1, the interior riser segment 234 of the reactor section 200 is positioned within the particulate solid separation section 210, while the exterior riser segment 232 is positioned outside of the particulate solid separation section 210.

The particulate solid separation section 210 comprises an outer shell 212 where the outer shell 212 defines an interior region 214 of the particulate solid separation section 210. The outer shell 212 comprises a gas outlet port 216, a riser port 218, and a particulate solid outlet port 222. Furthermore, the outer shell 212 houses a gas/solids separation device 220 and a particulate solid collection area 280 in the interior region 214 of the particulate solid separation section 210.

In one or more embodiments, the outer shell 212 of the particulate solid separation section 210 may define an upper segment 276, a middle segment 274, and a lower segment 272 of the particulate solid separation section 210. Generally, the upper segment 276 may have a substantially constant cross sectional area, such that the cross sectional area does not vary by more than 20% in the upper segment 276. Additionally, in one or more embodiments, the lower segment 272 of the particulate solid separation section 210 may have a substantially constant cross sectional area, such that the cross sectional area does not vary by more than 20% in the lower segment 272. The cross sectional area of the lower segment 272 may be larger than the maximum cross sectional area of the riser 230 and smaller than the maximum cross sectional area of the upper segment 276. The middle segment 274 may be shaped as a frustum where the cross sectional area of the middle segment 274 is not constant and the cross sectional area of the middle segment 274 transitions from the cross sectional area of the upper segment 276 to the cross sectional area of the lower segment 272 throughout the middle segment 274.

As depicted in FIG. 1, the interior riser segment 234 of the riser 230 extends through the riser port 218 of an outer shell of the particulate solid separation section 210. The riser port 218 may be any opening in the particulate solid separation section 210 through which at least the interior riser segment 234 of the riser 230 protrudes into the interior region 214 of the particulate solid separation section 210. In one or more embodiments, the interior riser segment 234 enters the particulate solid separation section 210 in the middle segment 274 or the upper segment 276, and does not pass through the lower segment 272.

At the upper segment 276 of the particulate solid separation section 210, the interior riser segment 234 may be in fluid communication with the gas/solids separation device 220. The gas/solids separation device 220 may be any mechanical or chemical separation device that may be operable to separate particulate solids from gas or liquid phases, such as a cyclone or a plurality of cyclones.

The particulate solids may move upward through the riser 230 from the reaction vessel 250 and into the gas/solids separation device 220. The gas/solids separation device 220, may be operable to deposit separated particulate solids into the bottom of the upper segment 276 or into the middle segment 274 or lower segment 272. The separated vapors may be removed from the fluid catalytic reactor system 100 via a pipe 120 at a gas outlet port 216 of the particulate solid separation section 210.

In one or more embodiments, the lower segment 272 of the particulate solid separation section 210 may comprise a particulate solid collection area 280. In one or more embodiments, the particulate solid collection area 280 may allow for accumulation of particulate solids within the particulate solid separation section 210. The particulate solid collection area 280 may comprise a stripping section. The stripping section may be utilized to remove product vapors from the particulate solids prior to sending them to the regeneration section 300. As product vapors transported to the regeneration section 300 will be combusted, it is desirable to remove those product vapors with the stripper, which utilizes less expensive gases for combustion than product gases.

The particulate solid collection area 280 in the lower segment 272 may comprise a particulate solid outlet port 222. Standpipe 126 may be connected to the particulate solid separation section 210 at particulate solid outlet port 222, and the particulate solids may be transferred out of the reactor section 200 via standpipe 126 and into the regeneration section 300. Optionally, the particulate solids may also be transferred directly back into the reaction vessel 250 via standpipe 122. Alternatively, the particulate solids may be premixed with regenerated particulate solids in the transport riser 130.

After separation in the particulate solid separation section 210, the spent particulate solids are transferred to the regeneration section 300. The regeneration section 300, as described herein, may share many structural similarities with the reactor section 200. As such, the reference numbers assigned to the portions of the regeneration section 300 are analogous to those used with reference to the reactor section 200, where if the final two digits of the reference number are the same the given portions of the reactor section 200 and regeneration section 300 may serve similar functions and have similar physical structure. Thus, many of the present disclosures related to the regeneration section 300 may be equally applied to the reactor section 200.

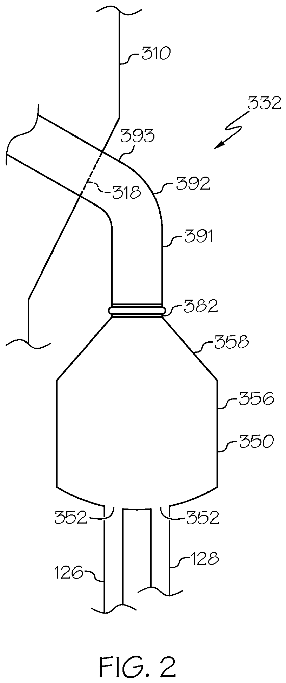

Referring now to the regeneration section 300, as depicted in FIGS. 1 and 2, the particulate solid treatment vessel 350 of the regeneration section 300 may include one or more reactor vessel inlet ports 352 and a reactor vessel outlet port 354 in fluid communication with, or even directly connected to, the exterior riser segment 332 of the riser 330. The particulate solid treatment vessel 350 may be in fluid communication with the particulate solid separation section 210 via standpipe 126, which may supply spent particulate solids from the reactor section 200 to the regeneration section 300 for regeneration. The particulate solid treatment vessel 350 may include an additional reactor vessel inlet port 352 where inlet 128 connects to the particulate solid treatment vessel 350. The inlet 128 may supply reactive fluids, such as supplemental fuels in liquid or gaseous form and oxygen containing gasses, including air, enriched air, and even pure oxygen, which may be used to at least partially regenerate the particulate solids. In one or more embodiments, the particulate solid treatment vessel 350 may comprise multiple additional reactor vessel inlet ports, and each additional reactor inlet port may supply a different reactive fluid to the particulate solid treatment vessel 350. For example, the particulate solids may be coked following the reactions in the reaction vessel 250, and the coke may be removed from the particulate solids by a combustion reaction. In alternative examples, oxygen containing gasses, such as air, may be fed into the particulate solid treatment vessel 350 via the inlet 128 to oxidize the particulate solids, or supplemental fuel may be fed into the particulate solid treatment vessel 350 and combusted to heat the particulate solids.

As depicted in FIGS. 1 and 2, the particulate solid treatment vessel 350 may be directly connected to the exterior riser segment 332 of the riser 330. In one embodiment, the particulate solid treatment vessel 350 may include a particulate solid treatment vessel body section 356 and a particulate solid treatment vessel transition section 358. The particulate solid treatment vessel body section 356 may generally comprise a greater diameter than the particulate solid treatment vessel transition section 358, and the particulate solid treatment vessel transition section 358 may be tapered from the size of the diameter of the particulate solid treatment vessel body section 356 to the size of the diameter of the exterior riser segment 332 such that the particulate solid treatment vessel transition section 358 projects inwardly from the particulate solid treatment vessel body section 356 to the exterior riser segment 332.

In one or more embodiments, the particulate solid treatment vessel 350 may have a maximum cross sectional area that is at least 3 times the maximum cross sectional area of the riser 330. For example, the particulate solid treatment vessel 350 may have a maximum cross sectional area that is at least 3, at least 4, at least 5, at least 6, at least 7, at least 8, at least 9, at least 10, at least 11, at least 12, at least 13, at least 14, or even at least 15 times the maximum cross sectional area of the riser 330.

Additionally, the particulate solid treatment vessel body section 356 may generally comprise a height, where the height of the particulate solid treatment vessel body section 356 is measured from the reactor vessel inlet port 352 to the particulate solid treatment vessel transition section 358. In one or more embodiments, the diameter of the particulate solid treatment vessel body section 356 may be greater than the height of the particulate solid treatment vessel body section 356. In one or more embodiments, the ratio of the diameter to the height of the particulate solid treatment vessel body section 356 may be from 5:1 to 1:5. For example, the ratio of the diameter to the height of the particulate solid treatment vessel body section 356 may be from 5:1 to 1:5, from 4:1 to 1:5, from 3:1 to 1:5, from 2:1 to 1:5, from 1:1 to 1:5, from 1:2 to 1:5, from 1:3 to 1:5, from 1:4 to 1:5, from 5:1 to 1:4, from 5:1 to 1:3, from 5:1 to 1:2, from 5:1 to 1:1, from 5:1 to 2:1, form 5:1 to 3:1, from 5:1 to 4:1, or any combination or sub-combination of these ranges.

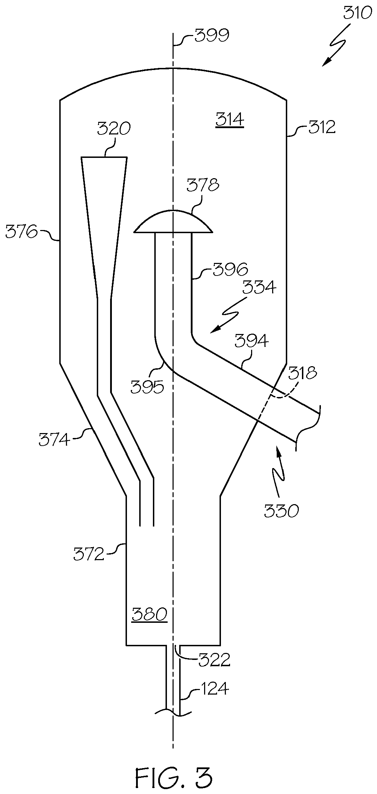

Referring to FIGS. 1 and 3, the particulate solid separation section 310 includes an outer shell 312 defining an interior region 314 of the particulate solid separation section 310. The outer shell 312 comprises a gas outlet port 316, a riser port 318, and a particulate solid outlet port 322. Furthermore, the outer shell 312 may house a secondary separation device 320 and a particulate solid collection area 380 in the interior region 314 of the particulate solid separation section 310.

In one or more embodiments, the outer shell 312 of the particulate solid separation section 310 may define an upper segment 376, a middle segment 374, and a lower segment 372 of the particulate solid separation section 310. Generally, the upper segment 376 may have a substantially constant cross sectional area, such that the cross sectional area does not vary by more than 20% in the upper segment 376. In one or more embodiments, the cross sectional area of the upper segment 376 may be at least three times the maximum cross sectional area of the riser 330. For example, the cross sectional area of the upper segment 376 may be at least 3 times, at least 4 times, at least 5 times, at least 6 times, at least 7 times, at least 8 times, at least 9 times, at least 10 times, at least 12 times, at least 15 times, or even at least 20 times the maximum cross sectional area of the riser 230, such as from 3 times to 40 times. In further embodiments, the maximum cross sectional area of the upper segment 376 may be from 5 to 40 times the maximum cross sectional area of the riser 330. For example, the maximum cross sectional area of the upper segment 376 may be from 5 to 40, from 10 to 40, from 15 to 40, from 20 to 40, from 25 to 40, from 30 to 40, from 35 to 40, from 5 to 35, from 5 to 30, from 5 to 25, from 5 to 20, from 5 to 15, or even from 5 to 10 times the maximum cross sectional area of the riser 330.

Additionally, in one or more embodiments, the lower segment 372 of the particulate solid separation section 310 may have a substantially constant cross sectional area, such that the cross sectional area does not vary by more than 20% in the lower segment 372. The cross sectional area of the lower segment 372 may be larger than the maximum cross sectional area of the riser 330 and smaller than the maximum cross sectional area of the upper segment 376. The middle segment 374 may be shaped as a frustum where the cross sectional area of the middle segment 374 is not constant and the cross sectional area of the middle segment 374 transitions from the cross sectional area of the upper segment 376 to the cross sectional area of the lower segment 372 throughout the middle segment 374.

Referring again to FIG. 3, the particulate solid separation section 310 may comprise a central vertical axis 399. The central vertical axis may extend through the top of the particulate solid separation section 310 and the bottom of the particulate solid separation section 310, such that the central vertical axis 399 passes through the upper segment 376, the middle segment 374, and the lower segment 372 of the particulate solid separation section 310. In one or more embodiments, the upper segment 376, the middle segment 374, and the lower segment 372 of the particulate solid separation section 310 may be centered on the central vertical axis 399. For example, in embodiments where the upper segment 376 and the lower segment 372 are substantially cylindrical, the central vertical axis 399 may pass through the midpoint of a diameter of the upper segment 376 and a midpoint of a diameter of the lower segment 372.

As depicted in FIGS. 1 and 3, the interior riser segment 334 of the riser 330 extends through the riser port 318 of the particulate solid separation section 310. The riser port 318 may be any opening in the outer shell 312 of particulate solid separation section 310 through which at least the interior riser segment 334 of the riser 330 protrudes into the interior region 314 of the particulate solid separation section 310. The riser port 318 is not located on the central vertical axis 399 of the particulate solid separation section 310. The riser port 318 is located on a sidewall of the outer shell 312 such that the riser port 318 is not located on the central vertical axis 399. In some embodiments, the riser port 318 is oriented so that the riser 330 does not extend into the particulate solid separation section 310 in a direction substantially parallel to the central vertical axis 399.

In one or more embodiments, the interior riser segment 334 enters the particulate solid separation section 310 in the middle segment 374 of the particulate solid separation section 310. In such embodiments, the interior riser segment 334 passes through at least a portion of the middle segment 374 and through at least a portion of the upper segment 376. In such embodiments, the interior riser segment 334 does not pass through the lower segment 372 of the particulate solid separation section 310. In further embodiments, the interior riser segment 334 may enter the particulate solid separation section 310 in the upper segment 376 and the interior riser segment 334 may pass through at least a portion of the upper segment 376. In such embodiments, the interior riser segment 334 does not pass through the lower segment 372 or the middle segment 374.

Referring now to FIG. 3, the interior riser segment 334 may comprise a vertical portion 396, a non-vertical portion 394, and a non-linear portion 395. As described herein, a "non-linear portion" may refer to a portion or a riser segment comprising a curve or a mitered junction. The non-linear portion 395 may be positioned between the vertical portion 396 and the non-vertical portion 394 and may connect the vertical portion 396 and the non-vertical portion 394. Additionally, the non-vertical portion 394 of the interior riser segment 334 may be proximate to the riser port 318. In one or more embodiments, the non-vertical portion 394 of the interior riser segment 334 may be adjacent or directly connected to the riser port 318. As such, the riser 330 may extend through the riser port 318 in a non-vertical direction.

Referring again to FIG. 2, the exterior riser segment 332 may comprise a vertical portion 391, a non-vertical portion 393, and a non-linear portion 392. The non-linear portion 392 may be positioned between the vertical portion 391 and the non-vertical portion 393 and may connect the vertical portion 391 and the non-vertical portion 393. The non-vertical portion 393 of the exterior riser segment 332 may be proximate to the riser port 318. In one or more embodiments, the non-vertical portion 393 of the exterior riser segment 332 may be adjacent or directly connected to the riser port 318. Furthermore, the vertical portion 391 of the exterior riser segment 332 may be proximate to the particulate solid treatment vessel 350. In such embodiments, an expansion joint 382, described in further detail herein, may be positioned between the vertical portion 391 of the exterior riser segment 332 and the particulate solid treatment vessel 350.

In one or more embodiments, the riser 330 may extend through the riser port 318 in a diagonal direction where the diagonal direction is 15 to 75 degrees from vertical. For example, the diagonal direction may be from 15 to 75 degrees from vertical, from 20 to 75 degrees from vertical, from 25 to 75 degrees from vertical, from 30 to 75 degrees from vertical, from 35 to 75 degrees from vertical, from 40 to 75 degrees from vertical, from 45 to 75 degrees from vertical, from 50 to 75 degrees from vertical, from 55 to 75 degrees from vertical, from 60 to 75 degrees from vertical, from 65 to 75 degrees from vertical, from 70 to 75 degrees from vertical, from 15 to 70 degrees from vertical, from 15 to 65 degrees from vertical, from 15 to 60 degrees from vertical, from 15 to 55 degrees from vertical, from 15 to 50 degrees from vertical, from 15 to 45 degrees from vertical, from 15 to 40 degrees from vertical, from 15 to 35 degrees from vertical, from 15 to 30 degrees from vertical, from 15 to 25 degrees from vertical, from 15 to 20 degrees from vertical, or any combination or sub-combination of these ranges. In one or more alternative embodiments, the riser 330 may pass through the riser port 318 is a substantially horizontal direction. As described herein, a "substantially horizontal" direction may be within 15 degrees of horizontal, within 10 degrees of horizontal, or even within 5 degrees of horizontal.

Referring to FIG. 1, the outer shell 312 may further house a riser termination device 378. The riser termination device 378 may be positioned proximate to the interior riser segment 334. In one or more embodiments, the riser termination device 378 may be directly connected to the vertical portion 396 of the interior riser segment 334. The gas and particulate solids passing through the riser 330 may be at least partially separated by riser termination device 378. The gas and remaining particulate solids may be transported to a secondary separation device 320 in the particulate solid separation section 310. The secondary separation device 320 may be any mechanical or chemical separation device that may be operable to separate particulate solids from gas or liquid phases, such as a cyclone or a plurality of cyclones.

According to one or more embodiments, the secondary separation device 320 may be a cyclonic separation system, which may include two or more stages of cyclonic separation. In embodiments where the secondary separation device 320 comprises more than one cyclonic separation stages, the first separation device into which the fluidized stream enters is referred to a primary cyclonic separation device. The fluidized effluent from the primary cyclonic separation device may enter into a secondary cyclonic separation device for further separation. Primary cyclonic separation devices may include, for example, primary cyclones, and systems commercially available under the names VSS (commercially available from UOP), LD2 (commercially available from Stone and Webster), and RS2 (commercially available from Stone and Webster). Primary cyclones are described, for example, in U.S. Patent Nos. 4,579,716; 5,190,650; and 5,275,641. In some separation systems utilizing primary cyclones as the primary cyclonic separation device, one or more set of additional cyclones, e.g. secondary cyclones and tertiary cyclones, are employed for further separation of the particulate solids from the product gas. It should be understood that any primary cyclonic separation device may be used in embodiments disclosed herein.

The secondary separation device 320 may deposit separated particulate solids into the bottom of the upper segment 376, the middle segment 374 or the lower segment 372 of the particulate solid separation section 310. As such, the particulate solids may flow by gravity from the bottom of the upper segment 376 or the middle segment 374 to the lower segment 372. The separated vapors may be removed from the fluid catalytic reactor system 100 via a pipe 129 at a gas outlet port 316 of the particulate solid separation section 310.

Referring to FIGS. 1 and 3, the lower segment 372 of the particulate solid separation section 310 may comprise a particulate solid collection area 380, which may allow for the accumulation of particulate solids in the particulate solid separation section 310. In one or more embodiments, the particulate solid collection area 380 may comprise one or more of an oxygen soak zone, an oxygen stripping zone, and a reduction zone.

As described herein, an "oxygen soak zone" may refer to a portion of the particulate solid collection area 380 where the particulate solids are exposed to a flow of oxygen containing gas. In one or more embodiments, the particulate solids may generally flow downward and the oxygen containing gas may generally flow upward. The particulate solids may have an average residence time of more than 2 minutes in the oxygen soak zone, and preferably have a residence time from 2 to 14 minutes. The particulate solids may become oxygen-containing particulate solids within the oxygen soak zone, and thus, may have increased activity for one or more reactions occurring in the reactor section 200, including but not limited to dehydrogenation reactions.

The particulate solid collection area 380 may comprise an oxygen stripping zone. As described herein, an "oxygen stripping zone" refers to a zone of the particulate solid collection area 380 where the particulate solids are stripped of oxygen containing gas molecules. Oxygen containing gas molecules may be stripped from the particulate solids by contacting the particulate solids with a gas that does not contain more than 0.5 mol.% oxygen. Generally, the particulate solids move downward and the gas moves upwards through the oxygen stripping zone. As such, excess oxygen-containing gas may not be passed to the reactor section 200 with the particulate solids.

As described herein, a "reduction zone" may refer to a zone where a reducing agent such as hydrogen or methane is fed in a catalyst stream fluidized by a non-participating gas such as nitrogen or steam. The reducing agent removes oxygen from the particle; thereby increasing the effectiveness of particle for reaction.

Referring again to FIGS. 1 and 3, the particulate solid collection area 380 may comprise a particulate solid outlet port 322. In one or more embodiments, the particulate solid outlet port 322 may be located proximate to, or even on, the central vertical axis 399. According to one or more embodiments, the bottom of the particulate solid collection area 380 may be curved such that the particulate solid outlet port 322 is located at the lowest portion of the particulate solid collection area 380. Standpipe 124 may be connected to the particulate solid separation section 310 at particulate solid outlet port 322, and the particulate solids may be transferred out of the regeneration section 300 via standpipe 124 and into the reactor section 200. As such, the particulate solids may be continuously recirculated through the reactor system 100.

Without wishing to be bound by theory, it is believed that when the riser 330 does not pass through the particulate solid collection area 380 and when the particulate solid outlet port 322 is located on the central vertical axis 399, then the flow of particulate solids through the particulate solid collection area 380 may be improved relative to designs in which the riser 330 does pass through the particulate solid collection area 380. When the riser 330 does not pass through the particulate solid collection area 380, the particulate solid outlet port 322 may be located on the central vertical axis 399, and the particulate solids may move through the particulate solid collection area 380 in manner more closely resembling plug flow. This may lead to an increased minimum residence time of the particulate solids within the particulate solid collection area 380, which may be beneficial when stripping, oxygen soaking, or other contemplated processes occur within the particulate solid collection area 380.

As described herein, portions of system units such as reaction vessel walls, separation section walls, or riser walls, may comprise a metallic material, such as carbon or stainless steel. In addition, the walls of various system units may have portions which are attached with other portions of the same system unit or to another system unit. Sometimes, the points of attachment or connection are referred to herein as "attachment points" and may incorporate any known bonding medium such as, without limitation, a weld, an adhesive, a solder, etc. It should be understood that components of the system may be "directly connected" at an attachment point, such as a weld.

To mitigate damage caused by hot particulate solids and gasses, refractory materials may be used as internal linings of various system components. Refractory materials may be included on the riser 330 as well as the particulate solid separation section 310. It should be understood that while embodiments are provided of specific refractory material arrangements and materials, they should not be considered limiting regarding the physical structure of the disclosed system. For example, refractory liner may extend in the riser 330 along an interior surface of the riser 330 and along interior surfaces of the middle segment 374 and upper segment 376 of the particulate solid separation section 310. The refractory liner may include hex mesh or other suitable refractory materials.

Mechanical loads applied onto the particulate solid treatment vessel 350 from the weight of the particulate solids, thermal stresses from differential growth of the various parts and other parts of the regeneration section 300 may be high, and in cases where expansion joints are not utilized springs may be utilized to allow movement of the particulate solid treatment vessel 350 while controlling nozzle forces within limits at the 318 junction. For example, the particulate solid treatment vessel 350 may be hung from springs, or springs may be positioned below the particulate solid treatment vessel 350 to support its weight and all or a portion of the expected catalyst weight. For example, FIG. 1 depicts spring supports 188 mechanically attached to the regeneration section 300 at the particulate solid treatment vessel 350, wherein the regeneration section 300 is suspended from a support structure by the spring supports 188.

Additionally, the particulate solid treatment vessel 350 and riser 330 may undergo thermal expansion. As such, hanging the particulate solid treatment vessel 350 from spring supports 188 or supporting the particulate solid treatment vessel 350 with spring supports 188 may relieve tension between the particulate solid treatment vessel 350 and the exterior riser segment 332. In cases where springs are used, generally expansion joints are not employed. Referring now to FIG. 2, an expansion joint 382 may be positioned between the particulate solid treatment vessel 350 and the exterior riser segment 332. As described herein, an "expansion joint" may refer to a bellows made of metal or other suitable material, which reduces the stress between the system components joined by the expansion joint. For example, expansion joints may be used to reduce stress between system components due to thermal expansion and contraction. In cases where an expansion joint is used, generally the particulate solid treatment vessel 350 will be supported via a fixed support (no springs) either by rod hangers or a skirt. In one or more embodiments, an expansion joint 382 may be used in combination with spring supports to mitigate stress caused by thermal expansion between the particulate solid treatment vessel 350 and the exterior riser segment 332.

### EXAMPLES

The following examples illustrate features of the present disclosure but are not intended to limit the scope of the disclosure. The following examples discuss the performance of particulate solid collection areas according to one or more embodiments disclosed herein.

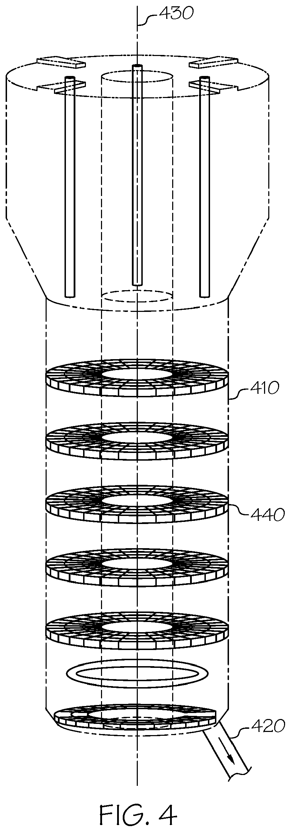

Flow of particulate solids through two particulate solid collection areas was modeled. The first particulate solid collection area 410 is depicted in FIG. 4, and had an annular shape with a single exit standpipe 420 located at the bottom of the particulate solid collection area 410. The exit standpipe 420 was not positioned on a central axis 430 of the first particulate solid collection area 410. The first particulate solid collection area 410 also includes several cordal beam supports covered with subway grating 440.

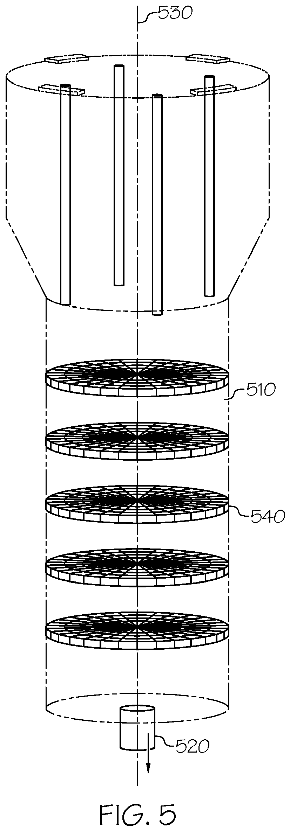

The second particulate solid collection area 510 is depicted in FIG. 5, and had a cylindrical shape and an exit standpipe 520 located at the bottom of the particulate solid collection area 510. The exit standpipe 520 was positioned on a central axis 530 of the second particulate solid collection area 510. The second particulate solid collection area 510 also includes several cordal beam supports covered with subway grating 540.

Computational fluid dynamics (CFD) simulations were conducted to model the flow of particulate solids through the first and second particulate solid collection areas. As such, solid residence time distributions (RTD) in each vessel were obtained. For the purposes of the simulation, the diameter of each of the first and second particulate solid collection areas was set to 1.17 m (46 inches). The superficial gas velocity at the bottom of each vessel was 9.14 cm/sec (0.3 ft/sec) and the average particulate solid flux was 16.6 kg/m²-sec (3.4 lb/ft²-sec). Additionally, the average turnaround time for the particulate solids was 8 minutes.

The CFD simulation for the first particulate solid collection area predicted that that the shortest residence time of the particulate solids was about 30 seconds, due to short-circuiting of the particulate solids on the outlet standpipe side of the vessel. The CFD simulation also predicted that about 42% of the particulate solids had a residence time of less than 4 minutes. The CFD simulations for the second particulate solid collection area predicted that the shortest residence time for the particulate solids would be greater than 1 minute and that only 30% of the particulate solids had a residence time shorter than 4 minutes.

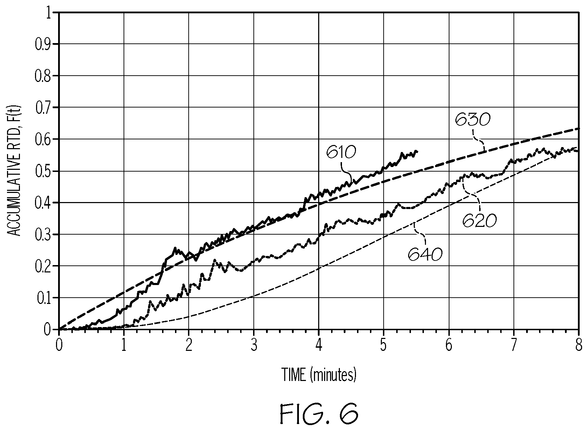

The RTDs for the first and second particulate solid collection areas are graphically depicted in FIG. 6. The RTD for the first particulate solid collection area is depicted by line 610 and the RTD for the second particulate solid collection area is depicted by line 620. Additionally, RTDs for one continuous stirred tank reactor (CSTR) and three CSTRs in series are displayed in FIG. 6 for reference. The RTD for one CSTR is depicted by line 630 and the RTD for three CSTRs in series is depicted by line 640. As displayed in FIG. 6, the RTD for the first particulate solid collection area is comparable to the RTD for a single CSTR and the RTD for the second particulate solid collection area is comparable to the RTD for three CSTRs in series. The second particulate solid collection area provides a benefit over the first particulate solid collection area because the flow of particulate solids through the second particulate solid collection area more closely resembles plug flow. As such, fewer particulate solids exit the particulate solid collection area quickly and fewer particulate solids are retained in the particulate solid collection area for a long time. This results in more consistent treatment of particulate solids in the particulate solid collection area.

The present invention provides a method for regenerating a particulate solid The method comprises regenerating a particulate solid in a particulate solid treatment vessel. The regenerating of the particulate solid comprises one or more of oxidizing the particulate solid by contact with an oxygen-containing gas; combusting coke present on the particulate solid; or combusting a supplemental fuel to heat the particulate solid. The method further comprises passing the particulate solid through a riser. The riser extends through a riser port of an outer shell of a particulate solid separation section such that the riser comprises an interior riser segment positioned in an interior region of the particulate solid separation section and an exterior riser segment positioned outside of an outer shell of the particulate solid separation section. The particulate solid separation section comprises at least the outer shell defining an interior region of the particulate solid separation section. The outer shell comprises a gas outlet port, a riser port, and a particulate solid outlet port. The outer shell houses a gas/solids separation device and a particulate solid collection area in the interior region of the particulate solid separation section. The riser port is positioned on a sidewall of the outer shell such that it is not located on a central vertical axis of the particulate solid separation section. The method further comprises separating the particulate solid from gases in the gas/solids separation device and passing the particulate solids, separated from the gasses, to the particulate solid collection area located proximate the central vertical axis of the particulate solid separation section.

In a preferred embodiment of the invention, the particulate solid treatment vessel has a maximum cross sectional area that is at least 3 times the maximum cross sectional area of the riser.

In a preferred embodiment of the invention, the riser extends through the riser port in a non-vertical direction.

In a preferred embodiment of the invention, the riser extends through the riser port in a diagonal direction, wherein the diagonal direction is from 15 to 75 degrees from vertical.

In a preferred embodiment of the invention, the riser extends through the riser port in a substantially horizontal direction.

In a preferred embodiment of the invention, the interior riser segment comprises a vertical portion, a non-vertical portion proximate the riser port, and a non-linear portion connecting the vertical portion and the non-vertical portion.

In a preferred embodiment of the invention, the outer shell further houses a riser termination device and wherein the riser termination device is positioned proximate to the interior riser segment.

In a preferred embodiment of the invention, the exterior riser segment comprises a vertical portion proximate to the particulate solid treatment vessel, a non-vertical portion proximate to the riser port, and a non-linear portion connecting the vertical portion and the non-vertical portion.

In a preferred embodiment of the invention, a maximum cross sectional area of the outer shell is at least three times a maximum cross sectional area of the riser.

In a preferred embodiment of the invention, a maximum cross sectional area of the outer shell is from 5 to 40 times a maximum cross sectional area of the riser.

In a preferred embodiment of the invention, the gas/solids separation device comprises one or more cyclones.

In a preferred embodiment of the invention, the riser does not pass through the particulate solid collection area.

In a preferred embodiment of the invention, the particulate solid collection area comprises an oxygen soak zone, an oxygen stripper, a reduction zone, or combinations thereof.

In a preferred embodiment of the invention, the particulate solid treatment vessel is supported by spring supports.

In a preferred embodiment of the invention, the particulate solid outlet port is located on the central vertical axis of the particulate solid separation section.

The subject matter of the present disclosure has been described in detail and by reference to specific embodiments. It should be understood that any detailed description of a component or feature of an embodiment does not necessarily imply that the component or feature is essential to the particular embodiment or to any other embodiment. Further, it should be apparent to those skilled in the art that various modifications and variations can be made to the described embodiments without departing from the scope of the claimed subject matter.

For the purposes of describing and defining the present disclosure it is noted that the terms "about" or "approximately" are utilized in this disclosure to represent the inherent degree of uncertainty that may be attributed to any quantitative comparison, value, measurement, or other representation. The terms "about" and/or "approximately" are also utilized in this disclosure to represent the degree by which a quantitative representation may vary from a stated reference without resulting in a change in the basic function of the subject matter at issue.

It is noted that one or more of the following claims utilize the term "wherein" as a transitional phrase. For the purposes of defining the present technology, it is noted that this term is introduced in the claims as an open-ended transitional phrase that is used to introduce a recitation of a series of characteristics of the structure and should be interpreted in like manner as the more commonly used open-ended preamble term "comprising."

It should be understood that where a first component is described as "comprising" a second component, it is contemplated that, in some embodiments, the first component "consists" or "consists essentially of" that second component. It should further be understood that where a first component is described as "comprising" a second component, it is contemplated that, in some embodiments, the first component comprises at least 10%, at least 20%, at least 30%, at least 40%, at least 50%, at least 60%, at least 70%, at least 80%, at least 90%, at least 95%, or even at least 99% that second component (where % can be weight % or molar %).

Additionally, the term "consisting essentially of" is used in this disclosure to refer to quantitative values that do not materially affect the basic and novel characteristic(s) of the disclosure. For example, a chemical composition "consisting essentially" of a particular chemical constituent or group of chemical constituents should be understood to mean that the composition includes at least about 99.5% of a that particular chemical constituent or group of chemical constituents.

It should be understood that any two quantitative values assigned to a property may constitute a range of that property, and all combinations of ranges formed from all stated quantitative values of a given property are contemplated in this disclosure. It should be appreciated that compositional ranges of a chemical constituent in a composition should be appreciated as containing, in some embodiments, a mixture of isomers of that constituent. In additional embodiments, the chemical compounds may be present in alternative forms such as derivatives, salts, hydroxides, etc.

## Claims

1. A method for regenerating a particulate solid, the method comprising:
regenerating the particulate solid in a particulate solid treatment vessel, where the regenerating of the particulate solid comprises one or more of:
oxidizing the particulate solid by contact with an oxygen-containing gas;
combusting coke present on the particulate solid; or
combusting a supplemental fuel to heat the particulate solid;
passing the particulate solid through a riser, the riser extending through a riser port of an outer shell of a particulate solid separation section such that the riser comprises an interior riser segment positioned in an interior region of the particulate solid separation section and an exterior riser segment positioned outside of the outer shell of the particulate solid separation section, wherein the particulate solid separation section comprises at least the outer shell defining the interior region of the particulate solid separation section, the outer shell comprising a gas outlet port, the riser port, and a particulate solid outlet port, and wherein the outer shell houses a gas/solids separation device and a particulate solid collection area in the interior region of the particulate solid separation section, and wherein the riser port is positioned on a sidewall of the outer shell such that it is not located on a central vertical axis of the particulate solid separation section;
separating the particulate solid from gasses in the gas/solids separation device; and
passing the particulate solid, separated from the gasses, to the particulate solid collection area located proximate the central vertical axis of the particulate solid separation section.

2. The method of claim 1, wherein the particulate solid treatment vessel has a maximum cross sectional area that is at least 3 times the maximum cross sectional area of the riser.

3. The method of any of the preceding claims, wherein the riser extends through the riser port in a non-vertical direction.

4. The method of any of the preceding claims, wherein the riser extends through the riser port in a diagonal direction, wherein the diagonal direction is from 15 to 75 degrees from vertical.

5. The method of any of claims 1 to 3, wherein the riser extends through the riser port in a substantially horizontal direction.

6. The method of any of the preceding claims, wherein the interior riser segment comprises a vertical portion, a non-vertical portion proximate the riser port, and a non-linear portion connecting the vertical portion and the non-vertical portion.

7. The method of any of the preceding claims, wherein the outer shell further houses a riser termination device and wherein the riser termination device is positioned proximate to the interior riser segment.

8. The method of any of the preceding claims, wherein the exterior riser segment comprises a vertical portion proximate to the particulate solid treatment vessel, a non-vertical portion proximate to the riser port, and a non-linear portion connecting the vertical portion and the non-vertical portion.

9. The method of any of the preceding claims, wherein a maximum cross sectional area of the outer shell is at least three times a maximum cross sectional area of the riser.

10. The method of any of the preceding claims, wherein a maximum cross sectional area of the outer shell is from 5 to 40 times a maximum cross sectional area of the riser.

11. The method of any of the preceding claims, wherein the gas/solids separation device comprises one or more cyclones.

12. The method of any of the preceding claims, wherein the riser does not pass through the particulate solid collection area.

13. The method of any of the preceding claims, wherein the particulate solid collection area comprises an oxygen soak zone, an oxygen stripper, a reduction zone, or combinations thereof.

14. The method of any of the preceding claims, wherein the particulate solid treatment vessel is supported by spring supports.

15. The method of any of the preceding claims, wherein the particulate solid outlet port is located on the central vertical axis of the particulate solid separation section.

## Patentansprüche

1. Verfahren zum Regenerieren eines partikulären Feststoffs, das Verfahren umfassend:
Regenerieren des partikulären Feststoffs in einem Behandlungsbehälter für partikuläre Feststoffe, wo das Regenerieren des partikulären Feststoffs eines oder mehrere umfasst von:
Oxidieren des partikulären Feststoffs durch Kontakt mit einem sauerstoffhaltigen Gas;
Verbrennen von Koks, das auf dem partikulären Feststoff vorhanden ist; oder
Verbrennen eines zusätzlichen Brennstoffs, um den partikulären Feststoff zu erhitzen;
Leiten des partikulären Feststoffs durch ein Steigrohr hindurch, wobei sich das Steigrohr durch eine Steigrohröffnung einer Außenhülle eines Trennabschnitts für partikuläre Feststoffe hindurch derart erstreckt, dass das Steigrohr ein inneres Steigrohrsegment, das in einer inneren Region des Trennabschnitts für partikuläre Feststoffe positioniert ist, und ein äußeres Steigrohrsegment, das außerhalb der Außenhülle des Trennabschnitts für partikuläre Feststoffe positioniert ist, umfasst, wobei der Trennabschnitt für partikuläre Feststoffe mindestens die Außenhülle, die die innere Region des Trennabschnitts für partikuläre Feststoffe definiert, umfasst, die Außenhülle umfassend eine Gasauslassöffnung, die Steigrohröffnung und eine Auslassöffnung für partikuläre Feststoffe, und wobei die Außenhülle eine Gas-/Feststofftrennvorrichtung und einen Sammelbereich für partikuläre Feststoffe in der inneren Region des Trennabschnitts für partikuläre Feststoffe unterbringt, und wobei die Steigrohröffnung an einer Seitenwand der Außenhülle derart positioniert ist, dass sie sich nicht auf einer zentralen vertikalen Achse des Trennabschnitts für partikuläre Feststoffe befindet;
Trennen des partikulären Feststoffs von Gasen in der Gas-/Feststofftrennvorrichtung; und
Leiten des partikulären Feststoffs, der von den Gasen getrennt wurde, an den Sammelbereich für partikuläre Feststoffe, der sich nahe der zentralen vertikalen Achse des Trennabschnitts für partikuläre Feststoffe befindet.

2. Verfahren nach Anspruch 1, wobei der Behandlungsbehälter für partikuläre Feststoffe einen maximalen Querschnittsbereich aufweist, der mindestens das 3-Fache des maximalen Querschnittsbereichs des Steigrohrs beträgt.

3. Verfahren nach einem der vorstehenden Ansprüche, wobei sich das Steigrohr in einer nicht vertikalen Richtung durch die Steigrohröffnung hindurch erstreckt.

4. Verfahren nach einem der vorstehenden Ansprüche, wobei sich das Steigrohr in einer diagonalen Richtung durch die Steigrohröffnung hindurch erstreckt, wobei die diagonale Richtung von 15 bis 75 Grad von einer Vertikalen ist.

5. Verfahren nach einem der Ansprüche 1 bis 3, wobei sich das Steigrohr in einer im Wesentlichen horizontalen Richtung durch die Steigrohröffnung hindurch erstreckt.

6. Verfahren nach einem der vorstehenden Ansprüche, wobei das innere Steigrohrsegment einen vertikalen Teil, einen nicht vertikalen Teil nahe der Steigrohröffnung und einen nicht linearen Teil, der den vertikalen Teil und den nicht vertikalen Teil verbindet, umfasst.

7. Verfahren nach einem der vorstehenden Ansprüche, wobei die Außenhülle ferner eine Steigrohrabschlussvorrichtung unterbringt und wobei die Steigrohrabschlussvorrichtung nahe des inneren Steigleitungssegments positioniert ist.

8. Verfahren nach einem der vorstehenden Ansprüche, wobei das äußere Steigrohrsegment einen vertikalen Teil nahe des Behandlungsbehälters für partikuläre Feststoffe, einen nicht vertikalen Teil nahe der Steigrohröffnung und einen nicht linearen Teil, der den vertikalen Teil und den nicht vertikalen Teil verbindet, umfasst.

9. Verfahren nach einem der vorstehenden Ansprüche, wobei ein maximaler Querschnittsbereich der Außenhülle mindestens das Dreifache eines maximalen Querschnittsbereichs des Steigrohrs beträgt.

10. Verfahren nach einem der vorstehenden Ansprüche, wobei ein maximaler Querschnittsbereich der Außenhülle das 5- bis 40-Fache eines maximalen Querschnittsbereichs des Steigrohrs beträgt.

11. Verfahren nach einem der vorstehenden Ansprüche, wobei die Gas-/Feststofftrennvorrichtung einen oder mehrere Zyklone umfasst.

12. Verfahren nach einem der vorstehenden Ansprüche, wobei das Steigrohr nicht durch den Sammelbereich für partikuläre Feststoffe hindurch geht.

13. Verfahren nach einem der vorstehenden Ansprüche, wobei der Sammelbereich für partikuläre Feststoffe eine Sauerstofftränkungszone, einen Sauerstoffabstreifer, eine Reduktionszone oder Kombinationen davon umfasst.

14. Verfahren nach einem der vorstehenden Ansprüche, wobei der Behandlungsbehälters für partikuläre Feststoffe durch Federstützen gestützt wird.

15. Verfahren nach einem der vorstehenden Ansprüche, wobei sich die Auslassöffnung für partikuläre Feststoffe auf der zentralen vertikalen Achse des Trennabschnitts für partikuläre Feststoffe befindet.

## Revendications

1. Procédé permettant de régénérer un solide particulaire, le procédé comprenant :
la régénération du solide particulaire dans un récipient de traitement de solide particulaire, où la régénération du solide particulaire comprend un ou plusieurs parmi :
l'oxydation du solide particulaire par contact avec un gaz contenant de l'oxygène ;
la combustion de coke présent sur le solide particulaire ; ou
la combustion d'un combustible complémentaire pour chauffer le solide particulaire ;
le passage du solide particulaire à travers une colonne montante, la colonne montante s'étendant à travers un orifice de colonne montante d'une enveloppe externe d'une section de séparation de solide particulaire de telle sorte que la colonne montante comprend un segment intérieur de colonne montante positionné dans une région intérieure de la section de séparation de solide particulaire et un segment extérieur de colonne montante positionné à l'extérieur de l'enveloppe externe de la section de séparation de solide particulaire, dans lequel la section de séparation de solide particulaire comprend au moins l'enveloppe externe définissant la région intérieure de la section de séparation de solide particulaire, l'enveloppe externe comprenant un orifice de sortie de gaz, l'orifice de colonne montante et un orifice de sortie de solide particulaire, et dans lequel l'enveloppe externe loge un dispositif de séparation gaz/solides et une zone de collecte de solide particulaire dans la région intérieure de la section de séparation de solide particulaire, et dans lequel l'orifice de colonne montante est positionné sur une paroi latérale de l'enveloppe externe de telle sorte qu'il n'est pas localisé sur un axe vertical central de la section de séparation de solide particulaire ;
la séparation du solide particulaire par rapport aux gaz dans le dispositif de séparation gaz/solides ; et
le passage du solide particulaire, séparé des gaz, à la zone de collecte de solide particulaire localisée à proximité de l'axe vertical central de la section de séparation de solide particulaire.

2. Procédé selon la revendication 1, dans lequel le récipient de traitement de solide particulaire a une aire en coupe transversale maximale qui vaut au moins 3 fois l'aire en coupe transversale maximale de la colonne montante.

3. Procédé selon l'une quelconque des revendications précédentes, dans lequel la colonne montante s'étend à travers l'orifice de colonne montante dans une direction non verticale.

4. Procédé selon l'une quelconque des revendications précédentes, dans lequel la colonne montante s'étend à travers l'orifice de colonne montante dans une direction diagonale, dans lequel la direction diagonale est à 15 à 75 degrés par rapport à la verticale.

5. Procédé selon l'une quelconque des revendications 1 à 3, dans lequel la colonne montante s'étend à travers l'orifice de colonne montante dans une direction sensiblement horizontale.

6. Procédé selon l'une quelconque des revendications précédentes, dans lequel le segment intérieur de colonne montante comprend une partie verticale, une partie non verticale à proximité de l'orifice de colonne montante, et une partie non linéaire reliant la partie verticale et la partie non verticale.

7. Procédé selon l'une quelconque des revendications précédentes, dans lequel l'enveloppe externe loge en outre un dispositif de terminaison de colonne montante et dans lequel le dispositif de terminaison de colonne montante est positionné à proximité du segment intérieur de colonne montante.

8. Procédé selon l'une quelconque des revendications précédentes, dans lequel le segment extérieur de colonne montante comprend une partie verticale à proximité du récipient de traitement de solide particulaire, une partie non verticale à proximité de l'orifice de colonne montante, et une partie non linéaire reliant la partie verticale et la partie non verticale.

9. Procédé selon l'une quelconque des revendications précédentes, dans lequel une aire en coupe transversale maximale de l'enveloppe externe vaut au moins trois fois une aire en coupe transversale maximale de la colonne montante.

10. Procédé selon l'une quelconque des revendications précédentes, dans lequel une aire en coupe transversale maximale de l'enveloppe externe vaut de 5 à 40 fois une aire en coupe transversale maximale de la colonne montante.

11. Procédé selon l'une quelconque des revendications précédentes, dans lequel le dispositif de séparation gaz/solides comprend un ou plusieurs cyclones.

12. Procédé selon l'une quelconque des revendications précédentes, dans lequel la colonne montante ne passe pas à travers la zone de collecte de solide particulaire.

13. Procédé selon l'une quelconque des revendications précédentes, dans lequel la zone de collecte de solide particulaire comprend une zone de trempage d'oxygène, un extracteur d'oxygène, une zone de réduction, ou des combinaisons de ceux-ci.

14. Procédé selon l'une quelconque des revendications précédentes, dans lequel le récipient de traitement de solide particulaire est supporté par des supports à ressort.

15. Procédé selon l'une quelconque des revendications précédentes, dans lequel l'orifice de sortie de solide particulaire est localisé sur l'axe vertical central de la section de séparation de solide particulaire.
